# EUROPEAN PATENT SPECIFICATION

(11) **EP 1 686 819 B1**
(45) Date of publication and mention of the grant of the patent: **07.05.2008**
(21) Application number: 06250419.6
(22) Date of filing: 26.01.2006
(51) Int. Cl.: H04Q 7/36

(54) **A mobile communication system**
Ein mobiles Kommunikationssystem
Un système de communication mobile

(30) Priority: 26.01.2005 JP 2005018480
(43) Date of publication of application: 02.08.2006
(73) Proprietor: NTT DoCoMo, Inc., Tokyo 100-6150 (JP)
(72) Inventor: Kato, Yasuhiro, NTT DoCoMo, Inc., Chiyoda-ku Tokyo 100-6150 (JP); Takahashi, Hideaki, NTT DoCoMo, Inc., Chiyoda-ku Tokyo 100-6150 (JP); Motegi, Masayuki, NTT DoCoMo, Inc., Chiyoda-ku Tokyo 100-6150 (JP); Nakamura, Takehiro, NTT DoCoMo, Inc., Chiyoda-ku Tokyo 100-6150 (JP)
(74) Representative: Vinsome, Rex Martin

(56) References cited:
- EP-A- 0 479 255
- EP-A- 1 278 389
- US-A- 5 724 665
- US-B1- 6 370 386

## Description

### BACKGROUND OF THE INVENTION

The present invention generally relates to a mobile communication system for providing mobile communication service by radio to a mobile station.

In the prior art, the PDC (Personal Digital Cellular) system and the IMT-2000 (International Mobile Telecommunications-2000) are known, which are widely adapted as mobile communication systems. The conventional node architecture employed by these systems is also known. These mobile communication systems, referred to as cellular systems, have two dimensional service areas formed by a group of radio cells established by base stations.

From the viewpoint of efficient radio resource usage, it is desired to have an allocating function of adequately allocating radio resources to base stations in consideration of congestion, and a hand-over function of selecting an optimum base station for a mobile station. These inter-cell functions are desirably performed by an upper node, which upper node is separate from the base stations.

Therefore, these systems comprise base stations which can perform conversion between the wired link and the radio link, and a radio controlling station which performs mobile station radio control such as hand-over control and position registration control, and so on.

As mentioned above, in the prior art communication systems, the mobile station radio control function is performed by the radio controlling station. However, this arrangement has disadvantages in that the radio controlling station is needed and radio control delay is increased.

The inventors of the present invention found that the radio controlling station is not necessarily required especially for single (independent) cell architecture and for less congested environments.

The conventional radio controlling station having such a mobile station radio control function is located far away from the base stations, and therefore the radio control of the mobile stations is much delayed especially when the sc-called entrance line between the radio controlling station and the base stations has narrow bandwidth or utilizes a satellite route. The increased delay in radio control lowers control efficiency and does not satisfy users' demands, and therefore avoiding the delay is desired.

One known mobile communication system is disclosed in EP-A-1278389. This discloses a mobile communication system comprising a plurality of base stations each able to perform by itself the call set up and hand-over operations necessary to provide the mobile communication service without any separate controlling base station being required.

### SUMMARY OF THE INVENTION

The present invention may provide a mobile communication system in which communication service can be given by base stations only and a multi-cell controlling station is used only when truly necessary, in order to avoid radio control delay.

In a preferred embodiment of the present invention is provided a mobile communication system for providing mobile communication service by radio to a mobile station, comprising:
a plurality of base stations that can perform by itself a function of controlling hand-overs and in-coming and cut-going calls necessary for providing said mobile communication service, even without a controlling station; and characterise by further comprising:
   a multi-cell controlling station that can perform a function of managing radio resource of the plural base stations forming radio cells and selecting an optimum one of the base stations, and a function of allocating the radio resources to the base stations in response to a request from a first one of the base stations;
wherein at least the first one of said base stations has means for determining its own radio resource usage rate; when controlling the in-coming or out-going call or the hand-over, said first one of the base stations is adapted to communicate with the multi-cell controlling station and the multi-cell controlling station is adapted to select one of the base stations to be allocated if the radio resource usage rate of the first one of the base stations exceeds a predetermined threshold, and the first one of the base stations is adapted to select by itself one of the base stations to be allocated without communicating with the multi-cell controlling station if the radio resource usage rate of the first one of the base stations is lower than the threshold,
whereby the station that selects one of the base stations to be allocated is switched between the multi-cell controlling station and the first one of the base stations depending on the radio resource usage.

### BRIEF DESCRIPTION OF THE DRAWINGS

Fig. 1 shows the node architecture of a mobile communication system according to an embodiment of the present invention;
Fig. 2 is a block diagram of the base station 3 according to the embodiment of the present invention;
Fig. 3 is a block diagram of the multi-cell controlling station 4 according to the embodiment of the present invention;
Fig. 4 is a sequence chart illustrating procedures for a call and a hand-over without the multi-cell controlling station 4 according to the embodiment of the present invention;
Fig. 5 is a sequence chart illustrating a calling procedure and a hand-over procedure with the multi-cell controlling station 4 according to another embodiment of the present invention; and
Fig. 6 is a flowchart illustrating a procedure in the base station 3 when receiving a request for radio link establishment or a request for a hand-over according to further embodiment of the present invention.

### DESCRIPTION OF THE PREFERRED EMBODIMENTS

The following is a description of embodiments of the represent invention, with reference to the accompanying drawings.

Throughout all the figures, members and parts having the same or similar functions are assigned the same or similar reference signs, and redundant explanations are omitted.

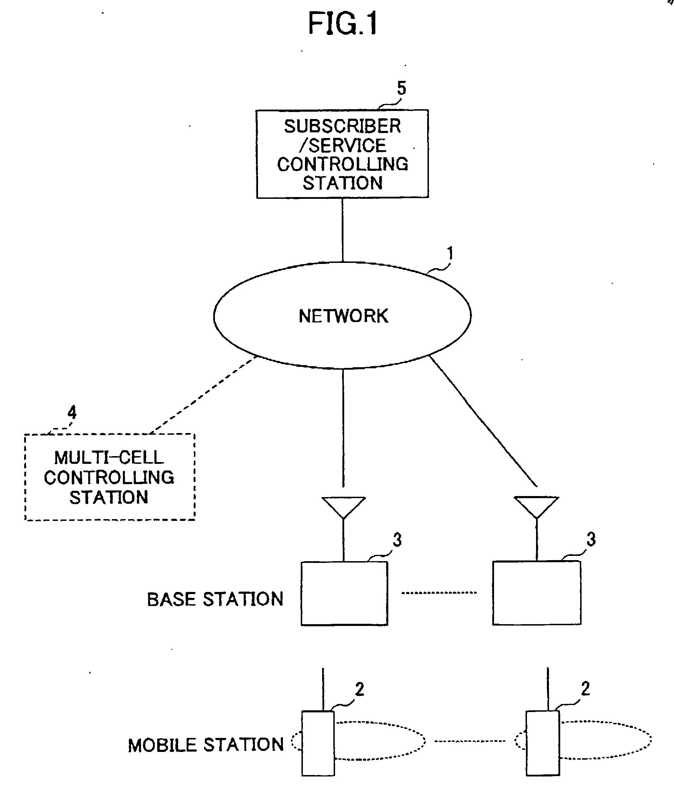

Fig. 1 shows node architecture of a mobile communication system according to an embodiment of the present invention. The mobile communication system shown in Fig. 1 comprises a core network 1, plural mobile stations 2, plural base stations 3, a multi-cell controlling station 4, and a subscriber/service controlling station 5.

The core network 1 may be a network using IP (Internet Protocol).

All layers from a physical layer to an application layer are terminated at the mobile station 2. The mobile station 2 has radio controlling functions for transmitting and receiving calls and performing hand-overs, and further has a selection function of selecting a base station 3 to communicate with at the request of the network.

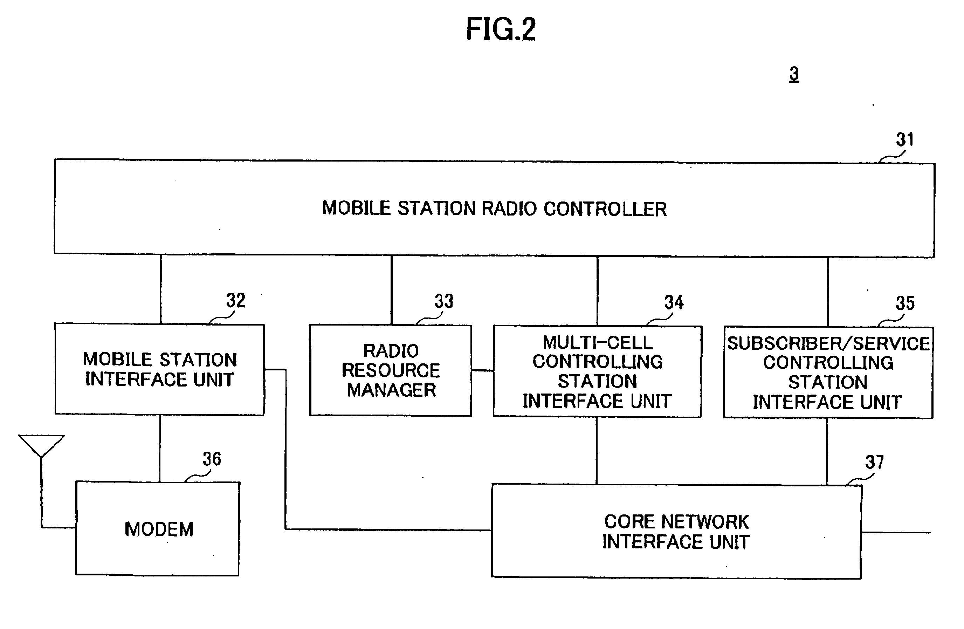

The base station 3 has a radio controlling function of controlling incoming and outgoing calls and hand-overs for each mobile station 2. The base station 3 has a protocol conversion function of converting protocols between the radio side (the mobile station 2 side) and the wired side (the core network 1 side). The base station 3 further has a communication function of transmitting/receiving information to and from the multi-cell controlling station 4 via the core network 1. The details are described below with reference to Fig. 2.

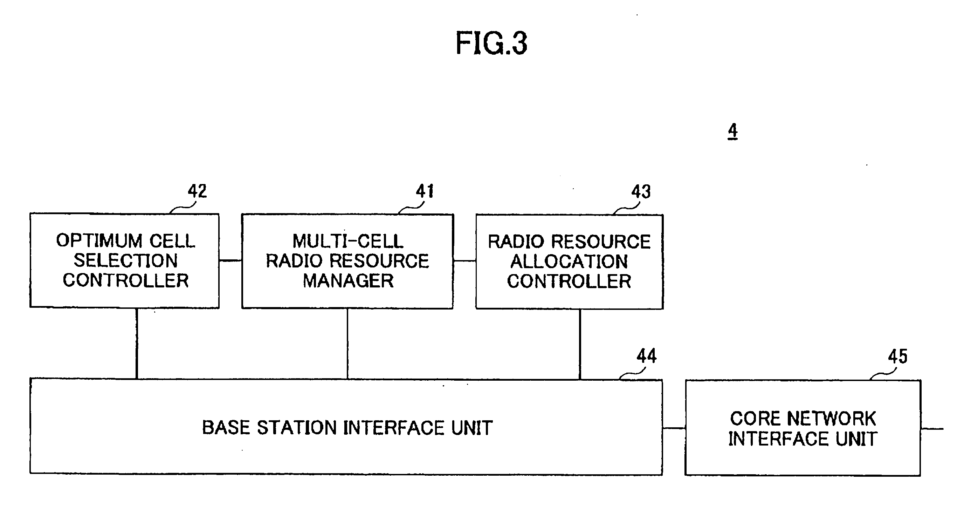

The multi-cell controlling station 4 has functions for managing radio resources of the plural base stations 3, selecting the optimum cell, and allocating radio resources. The details are described below with reference to Fig. 3.

The subscriber/service controlling station 5 has a function of transmitting and receiving information which is necessary for starting communications between the mobile station 2 and the network.

Fig. 2 is a block diagram of the base station 3 according to the embodiment of the present invention. The base station 3 shown in Fig. 3 comprises a mobile station radio controller 31, a mobile station interface 32, a radio resource manager 33, a multi-cell controlling station interface unit 34, a subscriber/service controlling station interface unit 35, a modem 36, and a core network interface unit 37.

The mobile station radio controller 31 has a function of managing, via the mobile station interface 32, radio control information (radio channel condition, authentication security information, charging traffic information, etc.) which is necessary for establishing a radio link for each mobile station 2. The mobile station radio controller 31 further has a controlling function of controlling hand-overs. Based on radio resource information managed by the radio resource manager 33, the mobile station radio controller 31 determines whether its own radio resource usage rate exceeds a predetermined threshold. If it is determined that its own radio resource usage rate is greater than the threshold (little available radio resources) when transmitting or receiving a call to or from a mobile station 2, the mobile station radio controller 31 communicates with the multi-cell controlling station 4 to receive instructions regarding the optimum radio cell to be allocated to the mobile station 2.

The mobile station interface 32 has a protocol conversion function of converting protocols of mainly a data link layer between the wired link and the radio link, according to instructions given by the mobile station radio controller 31.

The radio resource manager 33 has a function of managing the radio resource usage required for radio communication. The managed contents include resource information unique to radio access systems, and system usage conditions such as the number of connecting users and traffic amount. The resource information includes power resources, code resources, time resources, frequency resources, hardware resources, and so on. The radio resource manager 33 further may report radio resource status to the multi-cell controller 4, and dynamically change the allocation of various radio resources according to the instructions given by the multi-cell controlling station 4.

The multi-cell controlling station interface 34 has a function of performing protocol processing with the multi-cell controlling station 4. The mobile station radio controller 31 asks about the optimum cell for transmitting/receiving calls or performing hand-overs, via the multi-cell controlling station interface 34. Report of the radio resource status and the instruction to allocate radio resources are also done via the multi-cell controlling station interface 34.

The subscriber/service controlling station interface unit 35 has a function of performing protocol processing with the subscriber/service controlling station 5. Communications between the subscriber/service controlling station 5 and the mobile station 2 when sending/receiving calls is done via the subscriber/service controlling station interface unit 35.

The modem 36 has a function of converting between the wired signals and radio signals, and has a base band processing function, an RF band processing function, an amplifying function, and is connected to an antenna.

The core network interface unit 37 has a function of performing protocol processing of mainly a lower layer to communicate with the core network 1. Transmission/reception of signals to and from the multi-cell controlling station 4 and the subscriber/service controlling station 5 is done via the core network interface unit 37.

Fig. 3 is a block diagram of the multi-cell controlling station 4 according to the embodiment of the present invention. The multi-cell controlling station 4 shown in Fig. 3 comprises a multi-cell radio resource manager 41, an optimum cell selection controller 42, a radio resource allocation controller 43, a base station interface unit 44 and a core network interface 45.

The multi-cell radio resource manager 41 receives a report from a base station belonging thereto, and manages the radio resource usage.

When a mobile station 2 sends/receives calls and performs hand-overs, the optimum selection controller 42, at the request of the mobile station 2, selects the optimum cell and informs the base station 3 of the selected cell. The optimum cell is selected based on the radio resource usage conditions managed by the radio resource manager 33 of each base station 3.

The radio resource allocation controller 43 has a function of dynamically allocating radio resources when any base station 3 is short of radio resources.

The base station interface unit 44 has a function of performing protocol processing on signals transmitted/received between the multi-cell controlling station 4 and the base station 3.

The core network interface unit 45 has a function of performing protocol processing of mainly a lower layer to communicate with the core network.

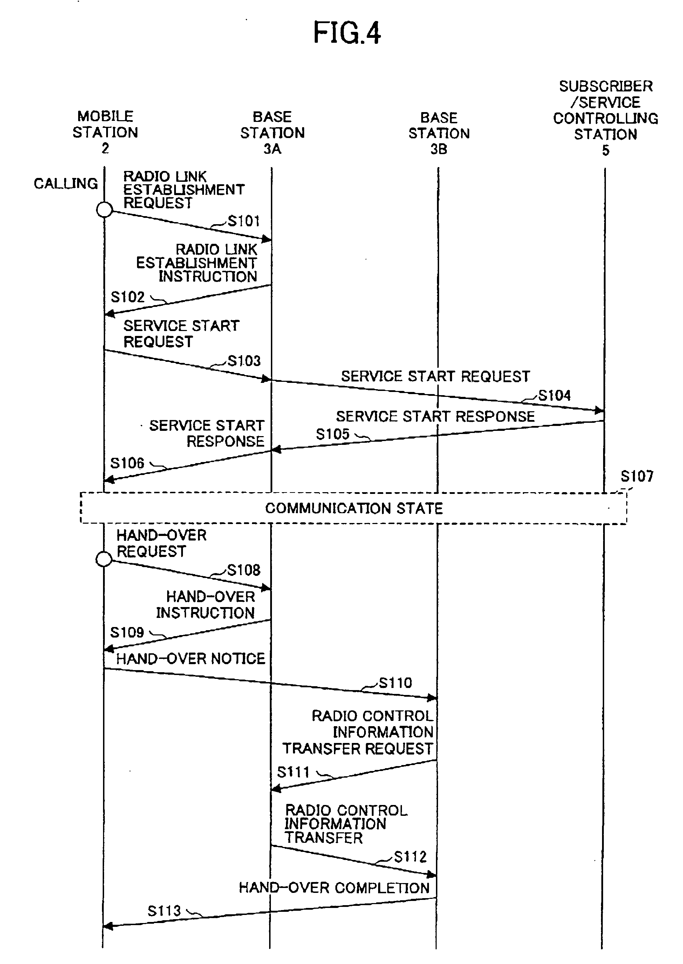

Fig. 4 is a sequence chart illustrating procedures for a call and a hand-over without the multi-cell controlling station 4 according to the embodiment of the present invention. Operations of each node, when establishing a call and performing a hand-over, are explained below with reference to Fig. 4.

First, when establishing a call, the mobile station 2 transmits a request for radio link establishment to the base station 3A at Step S101. The base station 3A receives the request for radio link establishment, designates its own radio cell, and transmits an instruction of radio link establishment to the mobile station 2 at step S102. In the conventional systems, such a radio link establishment procedure terminates at a radio controller arranged at a position higher than a base station. In the embodiment of the present invention, the radio link establishment terminates at the base station 3A.

Next, a request for starting service and a response thereto are transmitted and received between the mobile station 2 and the subscriber/service controlling station 5 via the base station 3A at steps S103~S106. Since these request and response signals are not directly related to the radio link, they are just forwarded by the base station 3A. Although there is one round formed by the service start request at steps S103, S104 and the service start response at steps S105, S106 in this embodiment, there may be plural rounds including signals other than service related signals.

The above procedure is completed and communications are maintained at step S107.

Operations for a hand-over are explained below. It is assumed that the system utilizes the mobile station assisted hand-over in which the mobile station 2 notifies the base station 3 of plural candidate radio cells having high reception quality.

The base station 3A receives a hand-over request from the mobile station 2 triggered by a strong electric field detection at step S108, designates one base station 3B out of the candidate base stations, which base station 3B has the highest reception quality, and transmits a hand-over instruction to the mobile station 2 at step S109. It should be noted that this procedure also terminates at the base station 3A similar to the above radio link establishment request and instruction (steps S101, S102).

Then, the mobile station 2 sends a hand-over notice to the base station 3B at step S110. The base station 3B receives the hand-over notice and requires the original base station 3A to transfer radio control information necessary for continuing communications at step S111. The base station 3A transfers the radio control information to the base station 3B at step S112. The hand-over is completed at step 5113. The radio control information includes on-going radio channel conditions, authentication security information, charging traffic information, etc., which are necessary for continuing the communications.

As mentioned above, according to the present invention, a mobile communication system may be established even without a multi-cell controlling station. Since the radio-related procedures such as the radio link establishment request/instruction (steps S101, S102), the hand-over request/instruction (steps S108, S109) and hand-over notice/completion (steps S110-S113) terminate at nodes such as the base stations 3A, 3B nearest to the mobile station 2, the control delay becomes short.

However, in a case where the multi-cell controlling station is not arranged, it is impossible to select the optimum radio cell considering traffic congestion or dynamically allocate radio resources. Therefore, the above structure is suitable for mobile communication systems which utilize a single cell arrangement or have plenty of radio resources even in a multi-cell arrangement.

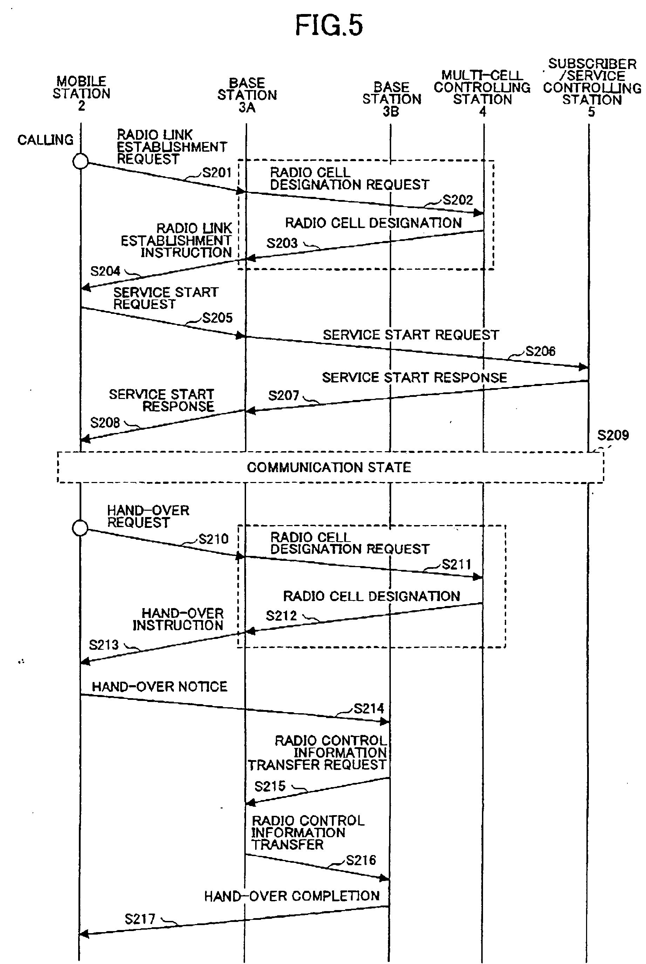

Fig. 5 is a sequence chart illustrating a calling procedure and a hand-over procedure with the multi-cell controlling station 4 according to another embodiment of the present invention.

The procedures shown in Fig. 5 are different from the procedures shown in Fig. 4 in steps (steps S202, S203, steps S211, S212) shown within broken line boxes. Radio cell designation requests and radio cell designation signals responding thereto are transmitted/received between the base station 3 and the multi-cell controlling station 4 in this embodiment.

In the procedures shown in Fig. 4 having no multi-cell controlling station, the base station 3A receives the radio link establishment request, designates its own radio cell, and directly sends the response to the mobile station 2. The base station 3a further receives the hand-over request, selects the base station having the highest reception quality, and directly sends the response to the mobile station 2.

On the other hand, in the procedures shown in Fig. 5, the base station 3A sends responses in accordance with instructions given by the multi-cell controlling station 4.

Therefore, the optimum radio cell can be selected and radio resources can be dynamically allocated by the multi-cell controlling station 4, in consideration of traffic congestion, to improve radio link capacity. However, communications with the multi-cell controlling station 4 make control delay longer. Accordingly, it is effective to ask (query) the multi-cell controlling station 4 only when traffic is congested and the radio resources become in short supply.

A procedure for querying the multi-cell controlling station 4, only when traffic congestion occurs, is explained below.

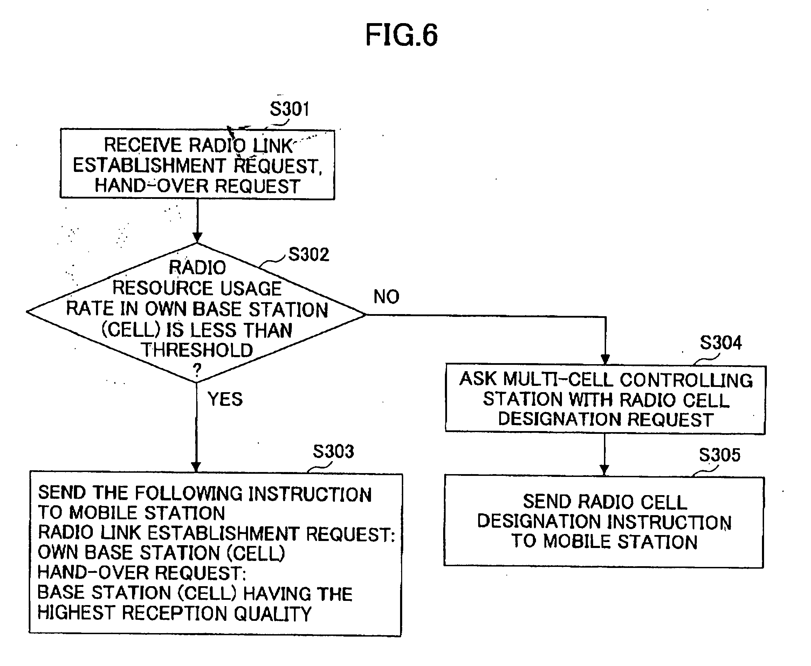

Fig. 6 is a flowchart illustrating a procedure in the base station 3 when receiving a request for radio link establishment or a request for a hand-over according to a further embodiment of the present invention.

In the procedure shown in Fig. 6, when the base station receives the request for radio link establishment or the request for a hand-over at step 5301, it compares its own radio resource usage rate with a predetermined threshold to determine whether to ask the multi-cell controlling station 4 at step S302.

If the usage rate is less than the threshold (enough resources are left), it is not necessary to ask the multi-cell controlling station 4, and the procedure goes to S303. The base station designates its own base station in response to the radio link establishment request and selects the base station having the highest reception quality in response to the hand-over request.

On the other hand, if its own radio resource usage rate exceeds the predetermined threshold (there are not enough remaining radio resources), the procedure goes to S304. The base station asks the multi-cell controlling station and sends the mobile station 2 an instruction given by the multi-cell controlling station 4 at step S305.

According to this embodiment of the present invention, the multi-cell controlling station 4 is utilized only when there are not enough available radio resources, so that increasing the control delay can be avoided.

## Claims

1. A mobile communication system for providing mobile communication service by radio to a mobile station (2), comprising:
a plurality of base stations (3) that can perform by itself a function of controlling hand-overs and in-coming and out-going calls necessary for providing said mobile communication service, even without a controlling station; and
**characterised by** further comprising:
a multi-cell controlling station (4) that can perform a function of managing radio resource of the plural base stations forming radio cells and selecting an optimum one of the base stations, and a function of allocating the radio resources to the base stations in response to a request from a first one of the base stations;
wherein at least the first one of said base stations has means (33) for determining its own radio resource usage rate; when controlling the in-coming or out-going call or the hand-over, said first one of the base stations is adapted to communicate with the multi-cell controlling station and the multi-cell controlling station is adapted to select one of the base stations to be allocated if the radio resource usage rate of the first one of the base stations exceeds a predetermined threshold, and the first one of the base stations is adapted to select by itself one of the base stations to be allocated without communicating with the multi-cell controlling station if the radio resource usage rate of the first one of the base stations is lower than the threshold,
whereby the station that selects one of the base stations to be allocated is switched between the multi-cell controlling station and the first one of the base stations depending on the radio resource usage.

2. The mobile communication system as claimed in claim 1,
wherein:
said hand-over controlling is performed based on a mobile station assisted hand-over system in which the mobile station is adapted to notify the first one of the base stations of candidate radio cells having high reception quality.

## Patentansprüche

1. Mobilkommunikationssystem zum Bereitstellen eines Mobilkonununikationsdienstes durch Funk für eine Mobilstation (2), umfassend:
eine Mehrzahl von Basisstationen (3), die sogar ohne eine Steuerungsstation selbst eine Funktion zur Steuerung von Weiterreichungen und von ankommenden und
abgebenden Rufen ausführen können, welche für die Bereitstellung des Mobillcoznmunikationsdienstes notwendig sind,
**dadurch gekennzeichnet, dass** es ferner umfasst:
eine Mehrzellen-Steuerungsstation (4), die eine Funktion zum Verwalten einer Funkressource der Mehrzahl von Funkzellen bildenden Basisstationen und zum Auswählen einer optimalen Basisstation von den Basisstationen sowie eine Funktion zum Zuweisen der Funkressourcen zu den Basisstationen auf eine Anforderung von einer ersten der Basisstationen ausführen kann,
wobei zumindest die erste der Basisstationen eine Einrichtung (33) zum Bestimmen ihrer eigenen Funkressourcen-Nutzungsrate aufweist,
wobei bei einer Steuerung des ankommenden oder abgehenden Rufes oder der Weiterreichung die erste der Basisstationen dazu geeignet ist, mit der Mehrzellen-Steuerungsstation zu kommunizieren, die Mehrzelien-Steuerungsstation dazu geeignet ist, eine der zuzuteilenden Basisstationen auszuwählen, falls die Funkressourcen-Nutzungsrate der ersten der Basisstationen einen bestimmten Schwellwert überschreitet, und die erste der Basisstationen dazu geeignet ist, selbst eine der zuzuweisenden Basisstationen ohne eine Kommunikation mit der Mehrzellen-Steuerungsstation auszuwählen, falls die Funkressourcen-Nutzungsrate der ersten der Basisstationen niedriger ist als der Schwellwert,
und wobei die Station, die eine der zuzuweisenden Basisstationen auswählt, in Abhängigkeit von der Funkressourcen-Nutzung zwischen der Mehrzellen-Steuerungsstation und der ersten der Basisstationen umgeschaltet wird.

2. Mobilkommunikationssystem nach Anspruch 1, wobei die Weiterreichungs-Steuerung auf der Grundlage eines durch eine Mobilstation unterstützten Weiterreichungssystems ausgeführt wird, in welchem die Mobilstation dazu geeignet ist, der ersten der Basisstationen Kandidaten-Funkzellen mit hoher Empfangsqualität zu melden.

## Revendications

1. Système de communication mobile procurant un service de communication mobile par radio à une station mobile (2), comportant:
une pluralité de stations de base (3) pouvant exécuter indépendamment une fonction de commande des transferts intercellulaires et des appels entrants et sortants nécessaire pour procurer ledit service de communication mobile, même sans station de commande ; et **caractérisé par le fait qu'**il comporte par ailleurs:
une station de commande multicellulaire (4) pouvant exécuter une fonction de gestion des ressources radio des multiples stations de base formant des cellules radio et sélectionnant une station de base optimale parmi les stations de base, et une fonction d'affectation des ressources radio aux stations de base en réponse à une demande provenant d'une première des stations de base ;
dans lequel au moins la première desdites stations de base a un moyen (33) permettant de déterminer son propre taux d'utilisation des ressources radio ;
lors de la commande de l'appel entrant ou sortant ou du transfert intercellulaire, ladite première des stations de base est adaptée pour communiquer avec la station de commande multicellulaire et la station de commande multicellulaire est adaptée pour sélectionner l'une des stations de base faisant l'objet d'une affectation si le taux d'utilisation des ressources radio de la première des stations de base dépasse un seuil prédéterminé, et la première des stations de base est adaptée pour sélectionner indépendamment l'une des stations de base faisant l'objet d'une affectation sans communication avec la station de commande multicellulaire si le taux d'utilisation des ressources radio de la première des stations de base est inférieur au seuil,
ce par quoi la station qui sélectionne l'une des stations de base faisant l'objet d'une affectation est commutée entre la station de commande multicellulaire et la première des stations de base en fonction de l'utilisation des ressources radio.

2. Système de communication mobile selon la revendication 1, dans lequel:
ladite commande de transfert intercellulaire est exécutée en fonction d'un système de transfert intercellulaire assisté par une station mobile comme quoi la station mobile est adaptée pour notifier la première des stations de base des cellules radio candidates ayant une qualité de réception élevée.
